# EUROPEAN PATENT APPLICATION

(11) **EP 1 858 268 A1**
(43) Date of publication of application: **21.11.2007**
(21) Application number: 06761501.3
(22) Date of filing: 19.07.2006
(51) Int. Cl.: H04Q 7/00

(54) **A METHOD FOR CONTROLLING THE NUMBER RECEIVING MANNER OF SSP**

(30) Priority: 21.09.2005 CN 200510103572
(71) Applicant: Huawei Technologies Co., Ltd., Longgang District Shenzhen Guangdong 518129 (CN)
(72) Inventor: YAO, Lili, Guangdong 518129 (CN); MO, Xiaojun, Guangdong 518129 (CN); DENG, Chuanbao, Guangdong 518129 (CN); WU, Xiaojing, Guangdong 518129 (CN)
(74) Representative: Manitz, Finsterwald & Partner GbR
(86) International application number: PCT/CN2006/001766
(87) International publication number: WO 2007/033556

(57) **Abstract**

A method for managing information collection includes: determining, by a Service Control Point, SCP, an information collection mode supported by a calling phone; sending, by the SCP, a Service Switching Point, SSP, the information collection mode; and instructing, by the SCP, the SSP to collect information of the calling phone according to the information collection mode. With the solution, the SCP may manage the information collection mode of an SSP by instruct the SSP to collection information using the information collection mode through issuing a PC operation to the SSP. For a calling phone supporting the FSK mode, the SSP may be managed to adopt the FSK mode to collect information. Thus, the characteristics of the FSK mode, rich contents of transmitted information, high transmission rate and high reliability, may be fully utilized. The technical solutions are applicable in a wide scope and very universal, and thus may be spread and applied widely in intelligent network services.

## Description

### Field of the Technology

The present invention relates to intelligent network transmission technologies, and more particularly, to a method for managing information collection.

### Background of the Invention

As prescribed in the Intelligent Network Application Protocol (INAP), after receiving an InitialDP (Initial Detection Point) operation reported by a Service Switching Point (SSP) and returning a Request Report Basic Call State Model (BCSM) Event (RRBE) message to the SSP, the Service Control Point (SCP) in an intelligent network initiatively sends a PromptAndCollectUserlnformation (PC) operation to the SSP to instruct the SSP to collect the information of a calling phone. After receiving the PC operation, the SSP interacts with the calling phone to acquire a card number and a password inputted by a user with the calling phone, and reports the card number and the password acquired to the SCP for authorization.

Based on definition of the operations in the Intelligent Network Application Protocol, PC operation sent by the SCP to the SSP in the existing intelligent network services includes no information for indicating which information collection mode the SSP should use to collect information. The default information collection mode of the SSP is the Dual Tone Multi Frequency (DTMF) mode. Thus, the SSP directly uses the DTMF mode to collect information upon receiving the PC operation. However, when the DTMF mode is used to collect information, the SSP may receive and report only a user number and transfer speed of the user number is low.

With the development of intelligent network services, some new transmission modes, such as the Frequency Shift Keying (FSK) mode, have already come forth at present. In the FSK mode, information such as user number, calling user name, calling date and calling time may be received and reported. Moreover, in the FSK mode, the transfer speed of the information is much higher, which may be 30 - 60 times of the transfer speed of the user number in the DTMF mode. In addition, in the FSK mode, the information being transferred may be verified.

The inventors of the present invention found that, because the PC operation sent by the SCP to an SSP includes no information for indicating which information collection mode the SSP should use to collect information; the SCP cannot manage the information collection mode used by the SSP. For a phone supporting other transmission modes, the SCP cannot manage the SSP to use the transmission mode supported by the phone to collect the information of the phone, which is very unfavorable for the spreading and application of other transmission modes in intelligent network services.

### Summary of the Invention

Embodiments of the present invention provide a method for managing information collection, so that the information collection mode used for collecting information of a calling phone may be managed.

A method for managing information collection includes: determining, by a Service Control Point, SCP, an information collection mode supported by a calling phone; sending, by the SCP, a Service Switching Point, SSP, the information collection mode; and instructing, by the SCP, the SSP to collect information of the calling phone according to the information collection mode.

The method further includes: sending, by the calling phone, an InitialDP operation through a calling Local Exchange, and the InitialDP operation carries the phone type of the calling phone and the SSP type of the SSP; reporting, by the SSP, the InitialDP operation to the SCP.

The method further includes: configuring a corresponding relation of phone types and information collection modes; wherein the determining the information collection mode supported by the calling phone includes: acquiring, by an SCP, a phone type of the calling phone according to an InitialDP operation reported by a Service Switching Point, SSP, determining, by the SCP, whether the corresponding relation of phone types and information collection modes includes the phone type of the calling phone, if the corresponding relation of phone types and information collection modes includes the phone type of the calling phone, determining an information collection mode corresponding to the phone type of the calling phone as the information collection mode supported by the calling phone, otherwise, determining a default information collection mode as the information collection mode supported by the calling phone.

The method further includes: configuring a corresponding relation of SSP types and information collection modes; wherein the determining the information collection mode supported by the calling phone includes: acquiring, by an SCP, an SSP type of an SSP according to an InitialDP operation reported by the SSP, determining, by the SCP, whether the corresponding relation of SSP types and information collection modes includes the SSP type of the SSP, if the corresponding relation of SSP types and information collection modes includes the SSP type of the SSP, determining an information collection mode corresponding to the SSP type of the SSP as the information collection mode supported by the calling phone, otherwise, determining a default information collection mode as the information collection mode supported by the calling phone.

The default information collection mode is a Dual Tone Multi Frequency, DTMF, mode.

The sending by the SCP the information collection mode to the SSP includes: sending, by the SCP, a PromptAndCollectUserlnformation operation carrying a parameter of the information collection mode to the SSP.

The method further includes: interacting, by the SSP, with the calling phone according to the information collection mode carried in the PromptAndCollectUserInformation operation upon receiving the PromptAndCollectUserInformation operation; and sending a PromptAndCollectUserInformation Response carrying the information obtained by the interacting to the SCP.

The information obtained by the interacting is carried by a character string response parameter in the PromptAndCollectUserInformation Response.

In the method for managing the information collection mode of an SSP provided by an embodiment of the present invention, the corresponding relation of phone types and information collection modes, or the corresponding relation of SSP types and information collection modes is configured in the database of the SCP, and a parameter indicating an information collection mode is configured in the PC operation. Thus, when required to send the PC operation to the SSP, the SCP may determine the information collection mode supported by the calling phone based on the corresponding relation, carry the information collection mode determined in the PC operation and send the PC operation to the SSP to instruct the SSP to collect the information of the calling phone having initiated a call using the information collection mode determined.

According to an embodiment of the present invention, the SCP may manage the information collection mode used by the SSP because the SCP may send the PC operation to the SSP to instruct the SSP to collect the information of the calling phone having initiated a call using the information collection mode detected by the SCP.

For a phone supporting the FSK mode, in an embodiment of the present invention, the SSP may be managed to collect the information of the phone using the FSK mode. Thus, the characteristics of the FSK mode, rich contents of transmitted information, high transmission rate and high reliability, may be fully utilized, which enables the FSK method to be spread and applied fast.

In addition, for a phone supporting a transmission mode other than the DTMF mode and the FSK mode, the SSP may be likewise managed to collect the information of the phone using the transmission mode supported by the phone. Thus, characteristics of different transmission modes may be fully utilized, which is very favorable for the spreading and application of other transmission modes in intelligent network services.

Finally, the technical solution provided by the embodiments of the present invention is applicable in a wide scope and very universal, and thus may be spread and applied widely in intelligent network services.

### Brief Description of the Drawings

Figure 1 is a flow chart illustrating the process for managing the information collection mode of an SSP according to an embodiment of the present invention.
Figure 2 is a signaling flow chart illustrating the process for managing the information collection mode of an SSP according to an embodiment of the present invention.
Figure 3 is a signaling flow chart illustrating the process for managing the information collection mode of an SSP according to an embodiment of the present invention.

### Embodiments of the Invention

The present invention is hereinafter further described in detail with reference to the drawings as well as preferred embodiments to make the technical solution and merits thereof more apparent.

According to an embodiment of the present invention, a corresponding relation of phone types and information collection modes, or a corresponding relation of SSP types and information collection modes is configured in the database of the SCP, and a parameter indicating an information collection mode is configured in the PC operation. When the SCP needs to send PC operation to the SSP, the SCP determines the information collection mode supported by the calling phone based on the corresponding relation of phone types and information collection modes or based on the corresponding relation of SSP types and information collection modes. The SCP sends the PC operation carrying the information collection mode to the SSP to instruct the SSP to collect information of the calling phone sending call information according to the information collection mode.

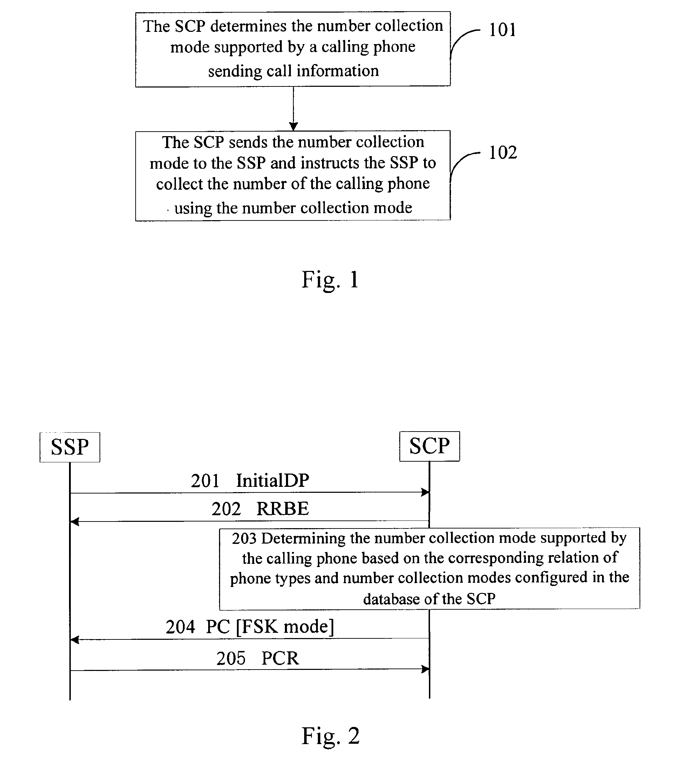

Figure 1 is a flow chart illustrating the process for managing the information collection mode of an SSP according to an embodiment of the present invention. As shown in Figure 1, the method includes the following.

Block 101: The SCP determines an information collection mode supported by a calling phone sending call information;

Block 102: The SCP sends the information collection mode to the SSP and instructs the SSP to collect the information of the calling phone according to the information collection mode.

In Block 101, if a corresponding relation of phone types and information collection modes is configured in the database of the SCP in advance, the SCP determines the information collection mode supported by the calling phone sending call information according to the following way, the SCP acquires the phone type of the calling phone sending call information from the call information received from the SSP, and determines whether the corresponding relation of phone types and information collection modes configured in the database of the SCP includes the phone type of the calling phone sending call information. If the corresponding relation of phone types and information collection modes includes the phone type of the calling phone sending call information, the SCP determines an information collection mode corresponding to the phone type of the calling phone sending call information as the information collection mode supported by the calling phone sending call information; otherwise, the SCP determines a default information collection mode as the information collection mode supported by the calling phone sending call information.

In Block 101, if a corresponding relation of SSP types and information collection modes is configured in the database of the SCP in advance, the SCP determines the information collection mode supported by the calling phone sending call information according to the following way, the SCP acquires the SSP type of the SSP from the call information reported by the SSP, and determines whether the corresponding relation of SSP types and information collection modes configured in the database of the SCP includes the SSP type of the SSP reporting the call information. If the corresponding relation of SSP types and information collection modes includes the SSP type of the SSP reporting call information, the SCP determines an information collection mode corresponding to the SSP type of the SSP reporting call information as the information collection mode supported by the calling phone sending call information; otherwise, the SCP determines the default information collection mode as the information collection mode supported by the calling phone sending call information.

The call information may be an InitialDP operation carrying a calling number, the phone type of the calling phone, the SSP type and an access code of the intelligent network. The corresponding relation of phone types and information collection modes, or the corresponding relation of SSP types and information collection modes is configured in the database of the SCP, and is stored in the database of the SCP generally in a form of a corresponding relation table. The corresponding relation table of phone types and information collection modes includes the phone types and the information collection modes, each of the phone types corresponds to one of the information collection modes. The corresponding relation table of SSP types and information collection modes includes the SSP types and the information collection modes, each of the SSP types corresponds to one of the information collection modes. In application, the DTMF mode is generally used as the default information collection mode.

After determining the information collection mode, in Block 102, the SCP sends PC operation carrying the information collection mode determined to the SSP and instructs the SSP to collect the information of the calling phone according to the information collection mode determined. In the existing PC operation, there is no parameter for indicating which information collection mode the SSP should use to collect the information. in one embodiment of this invention, a parameter for indicating which information collection mode the SSP should use to collect the information is added into the PC operation. The parameter is called "information collection mode". The value of the parameter ranges 0 - 127, and 0 is generally used as the default information collection mode, while 1 - 127 are used as different information collection modes configured by the SCP. Because the DTMF mode is generally used as the default information collection mode, the parameter, 0, indicates that the information collection mode is the DTMF mode. The parameter, 1, may indicate that the information collection mode is the FSK mode. The parameters, 2 - 127, are reserved, each of which may be used for indicating that the information collection mode is another transmission mode.

If determining that the information collection mode supported by the calling phone is the DTMF mode, the SCP configures the parameter of information collection mode in the PC operation to 0, and sends the PC operation with the parameter of information collection mode configured to 0 to the SSP to instruct the SSP to collect the information of the calling phone sending call information according to the DTMF mode. If determining that the information collection mode supported by the calling phone is the FSK mode, the SCP configures the parameter of information collection mode in the PC operation to 1, and sends the PC operation with the parameter of information collection mode configured to 1 to the SSP to instruct the SSP to collect the information of the calling phone sending call information according to the FSK mode. For the SSP, after receiving the PC operation sent by the SCP, the SSP collects the information of the calling phone sending call information according to the DTMF mode if the SSP determines that the parameter of information collection mode in the PC operation is 0; the SSP collects the information of the calling phone sending call information according to the FSK mode if the SSP determines that the parameter of information collection mode in the PC operation is 1.

After the SSP collects the information of the calling phone sending call information according to the information collection mode indicated by the SCP, in an embodiment of the present invention, in order to enable the SSP to report information acquired through interaction with the calling phone to the SCP, a character string response parameter is newly added into a PromotAndCollectUserInformaiton Response returned by the SSP to the SCP. The character string response parameter is used for indicating the information acquired through the interaction between the SSP and the calling phone. The character string response parameter ends with '\0' and has an effective length of 126 bytes.

Detailed description is given hereinafter with reference to embodiments and the attached drawings, to make the method for managing the information collection mode of the SSP of the present invention clearer.

Figure 2 is a signaling flow chart illustrating the process for managing the information collection mode of an SSP according to an embodiment of the present invention. In this embodiment, a corresponding relation of phone types and information collection modes is configured in the database of an SCP. As shown in Figure 2, the method includes the following.

201: Upon receiving an InitialDP operation sent by a calling phone through a calling Local Exchange, the SSP reports the InitialDP operation to the SCP. The InitialDP operation carries such information as a calling number, a calling phone type, an SSP type and an access code of the intelligent network.

202: The SCP returns an RRBE message to the SSP upon receiving the InitialDP operation.

203: The SCP acquires the phone type of the calling phone sending call information from the InitialDP operation received from the SSP, and determines whether the corresponding relation of phones types and information collection modes configured in the database of the SCP includes the phone type of the calling phone sending call information. If the corresponding relation of phones types and information collection modes includes the phone type of the calling phone sending call information, the SCP determines an information collection mode corresponding to the phone type of the calling phone as the information collection mode supported by the calling phone sending call information; otherwise, the SCP determines a default information collection mode as the information collection mode supported by the calling phone sending call information.

In this embodiment, if the information collection mode corresponding to the phone type of the calling phone sending call information in the corresponding relation of phone types and information collection modes is the FSK mode, the SCP determines the FSK mode as the information collection mode supported by the calling phone sending call information.

204: The SCP configures the parameter of information collection mode in the PC operation to the FSK mode and sends the PC operation to the SSP to instruct the SSP to collect the information of the calling phone sending call information according to the FSK mode indicated by the parameter of information collection mode in the PC operation.

205: Upon receiving the PC operation, the SSP determines that the information collection mode indicated by the parameter of information collection mode in the PC operation is the FSK mode. The SSP interacts with the calling phone sending call information according to the FSK mode, and carries the information acquired through the interaction in the character string response parameter of a PromptAndCollectUserInfromation Response (PCR) and reports the PCR to the SCP.

Therefore, the function of managing, the information collection mode of the SSP may be implemented by the SCP according to this embodiment. In order to make the method for managing the information collection mode of an SSP provided by the embodiments of the present invention clearer, a detailed description is hereinafter given with reference to one more specific embodiment and the attached drawings.

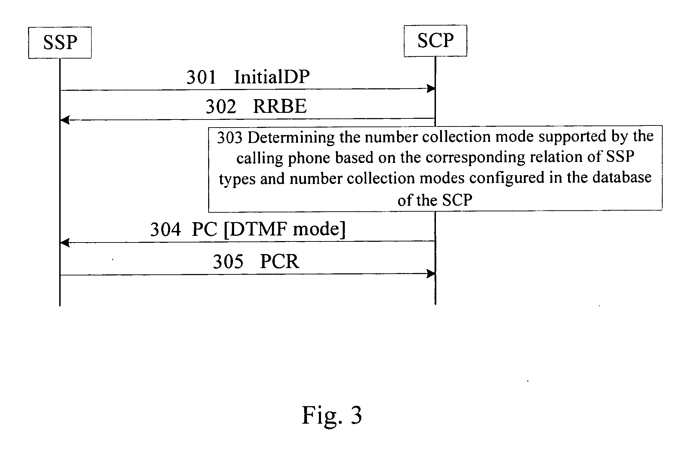

Figure 3 is a signaling flow chart illustrating the process for managing the information collection mode of an SSP according to an embodiment of the present invention. In this embodiment, a corresponding relation of SSP types and information collection modes is configured in the database of the SCP. As shown in Figure 3, the method includes the following.

301: Upon receiving an InitialDP operation sent by a calling phone through a calling Local Exchange, the SSP reports the InitialDP operation to the SCP. The InitialDP operation carries at least such information as a calling number, a calling phone type, an SSP type and an access code of the intelligent network.

302: The SCP returns an RRBE message to the SSP upon receiving the InitialDP operation.

303: The SCP acquires the SSP type of the SSP from the InitialDP operation reported by the SSP, determines whether the corresponding relation of SSP types and information collection modes configured in the database of the SCP includes the SSP type of the SSP having reported call information. If the corresponding relation of SSP types and information collection modes includes the SSP type of the SSP having reported call information, the SCP determines the information collection mode corresponding to the SSP type of the SSP as the information collection mode supported by the calling phone sending call information; otherwise, the SCP determines the default information collection mode as the information collection mode supported by the calling phone sending call information.

In this embodiment, if the corresponding relation of SSP types and information collection modes does not include SSP type of the SSP having reported call information, the SCP determines the DTMF mode as the information collection mode supported by the calling phone sending call information.

304: The SCP configures the parameter of information collection mode in the PC operation to the DTMF mode and sends the PC operation to the SSP to instruct the SSP to collect the information of the calling phone sending call information according to the DTMF mode indicated by the parameter of information collection mode in the PC operation.

305: Upon receiving the PC operation, the SSP determines that the information collection mode indicated by the parameter of information collection mode in the PC operation is the DTMF mode, and then interacts with the calling phone sending call information according to the DTMF mode and carries the information acquired through the interaction in a PCR and reports the PCR to the SCP.

Therefore, the function of managing, by the SCP, the information collection mode of the SSP may be likewise implemented according to this embodiment.

The purpose, technical solution and merits of the present invention have been further described in detail by the above specific embodiments. It should be appreciated that the above is only specific embodiments of the present invention and is not for use in limiting the present invention. Any modification, equivalent substitution, improvement within the spirit and principle of the present invention should be covered in the protection scope of the present invention.

## Claims

1. A method for managing information collection, comprising:
determining, by a Service Control Point, SCP, an information collection mode supported by a calling phone;
sending, by the SCP, a Service Switching Point, SSP, the information collection mode; and
instructing, by the SCP, the SSP to collect information of the calling phone according to the information collection mode.

2. The method of claim 1, further comprising:
sending, by the calling phone, an InitialDP operation through a calling Local Exchange, and the InitialDP operation carries the phone type of the calling phone and the SSP type of the SSP;
reporting, by the SSP, the InitialDP operation to the SCP.

3. The method of claim 2, further comprising:
configuring a corresponding relation of phone types and information collection modes;
wherein the determining the information collection mode supported by the calling phone comprises:
acquiring, by an SCP, a phone type of the calling phone according to an InitialDP operation reported by a Service Switching Point, SSP,
determining, by the SCP, whether the corresponding relation of phone types and information collection modes includes the phone type of the calling phone, if the corresponding relation of phone types and information collection modes includes the phone type of the calling phone, determining an information collection mode corresponding to the phone type of the calling phone as the information collection mode supported by the calling phone, otherwise, determining a default information collection mode as the information collection mode supported by the calling phone.

4. The method of claim 1, further comprising:
configuring a corresponding relation of SSP types and information collection modes;
wherein the determining the information collection mode supported by the calling phone comprises:
acquiring, by an SCP, an SSP type of an SSP according to an InitialDP operation reported by the SSP,
determining, by the SCP, whether the corresponding relation of SSP types and information collection modes includes the SSP type of the SSP, if the corresponding relation of SSP types and information collection modes includes the SSP type of the SSP, determining an information collection mode corresponding to the SSP type of the SSP as the information collection mode supported by the calling phone, otherwise, determining a default information collection mode as the information collection mode supported by the calling phone.

5. The method of claim 3 or 4, wherein the default information collection mode is a Dual Tone Multi Frequency, DTMF, mode.

6. The method of claim 1, wherein the sending by the SCP the information collection mode to the SSP comprises:
sending, by the SCP, a PromptAndCollectUserInformation operation carrying a parameter of the information collection mode to the SSP.

7. The method of claim 6, further comprising:
interacting, by the SSP, with the calling phone according to the information collection mode carried in the PromptAndCollectUserInformation operation upon receiving the PromptAndCollectUserInformation operation; and
sending a PromptAndCollectUserInformation Response carrying the information obtained by the interacting to the SCP.

8. The method of claim 7, wherein the information obtained by the interacting is carried by a character string response parameter in the PromptAndCollectUserInformation Response.
